# EUROPÄISCHE PATENTSCHRIFT

(11) **EP 3 997 358 B1**
(45) Veröffentlichungstag und Bekanntmachung des Hinweises auf die Patenterteilung: **10.04.2024**
(21) Anmeldenummer: 20737344.0
(22) Anmeldetag: 22.06.2020
(51) Int. Cl.: F16F 15/12, F16F 15/123

(54) **TORSIONSSCHWINGUNGSDÄMPFER**
TORSIONAL VIBRATION DAMPER
AMORTISSEUR DE VIBRATIONS DE TORSION

(30) Priorität: 12.07.2019 DE 102019118971
(43) Veröffentlichungstag der Anmeldung: 18.05.2022
(73) Patentinhaber: Schaeffler Technologies AG & Co. KG, 91074 Herzogenaurach (DE)
(72) Erfinder: RUSCH, Alain, 67760 Gambsheim (FR); HÄSSLER, Martin, 76676 Graben-Neudorf (DE); KESSLER, Michael, 77815 Bühl (DE); THERIOT, Laurent, 67000 Strasbourg (FR)
(86) Internationale Anmeldenummer: PCT/DE2020/100526
(87) Internationale Veröffentlichungsnummer: WO 2021/008649

(56) Entgegenhaltungen:
- EP-A2- 0 131 881
- EP-B1- 0 131 881
- WO-A1-2010/012078
- DE-A1-102014 214 193

## Beschreibung

Die Erfindung betrifft einen Torsionsschwingungsdämpfer. Der Torsionsschwingungsdämpfer wird insbesondere in einem Antriebsstrang eines Kraftfahrzeuges eingesetzt.

Torsionsschwingungsdämpfer sind in einen mit periodischen Störungen angeregten Antriebsstrang gezielt eingebrachte Torsionsnachgiebigkeiten. Ziel hierbei ist, die in verschiedenen Betriebssituationen auftretenden störenden Schwingungsresonanzen in einen Drehzahlbereich möglichst unterhalb der Betriebsdrehzahlen zu verschieben. Im Betriebsdrehzahlbereich verbleibende Schwingungsresonanzen werden über eine externe oder integrierte Reibeinrichtung gedämpft, deren Reibmoment in definierten Grenzen zu liegen hat. Die Reibeinrichtung kann insbesondere unabhängig von der Torsionsnachgiebigkeit ausgeführt sein und wird daher im Folgenden nicht betrachtet.

Um einen weitgehend überkritischen Betrieb mit einer guten Schwingungsisolation von den Störungen am Antrieb zu ermöglichen, wird eine möglichst hohe Torsionsnachgiebigkeit, d.h. eine niedrige Torsionssteifigkeit angestrebt. Allerdings muss gleichzeitig das maximale Antriebsmoment abgedeckt werden, was bei niedriger Torsionssteifigkeit einen entsprechend hohen Verdrehwinkel erfordert. In einem gegebenen Einbauraum ist der darstellbare Verdrehwinkel durch die Kapazität eingesetzter Energiespeicher und die ausreichend robust zu gestaltenden Bauteile, die im Drehmomentenfluss stehen, jedoch naturgemäß begrenzt. Es ist daher vorteilhaft, die Energiespeicherelemente des Torsionsschwingungsdämpfers außerhalb eines Drehmomentflusses anzuordnen.

Für bestimmte Anwendungen sind kompakte Ausführungen von Torsionsschwingungsdämpfern erforderlich (also geringer Durchmesser, ggf. größere verfügbare Länge entlang der axialen Richtung). Derartige Anforderungen liegen z. B. bei Krafträdern oder elektrischen Maschinen vor. Bei elektrischen Maschinen müssen Torsionsschwingungsdämpfer z. B. innerhalb eines Rotors anordenbar sein.

Weiter ist bekannt als Energiespeicherelement z. B. eine Tellerfeder einzusetzen. Tellerfedern werden allerdings regelmäßig durch Stanzen hergestellt und weisen deswegen eine Schnittkante an ihrem Kraftrand auf. Dadurch kann die Lebensdauer gerade unter pulsender Belastung stark eingeschränkt werden, insbesondere im Vergleich zu Druckfedern bzw. Schraubendruckfedern (die Oberflächenqualität von Druckfederdrähten ist deutlich besser als die der Stanzkante einer Tellerfeder).

Weiter ist bekannt als Wälzkörper Kugeln einzusetzen. Diese weisen aber vergleichsweise kleine Kontaktflächen auf und verfügen daher über eine nur geringe Kraftkapazität. Eine alternative Möglichkeit betrifft Zylinderrollen, wobei diese sich aber beim Abrollen nicht entlang einer Umfangsrichtung bewegen würden.

Aus dem Stand der Technik sind Torsionsschwingungsdämpfer verschiedenster Art bekannt. Beispielsweise ist aus der FR 3058489 A1 ein Torsionsschwingungsdämpfer mit in Umfangsrichtung wirkenden Druckfedern bekannt. Der Dämpfer hat bei geringem Außendurchmesser gleichzeitig eine vergleichsweise große Länge in der axialen Richtung.

Aus der DE 1 475 304 A1 ist eine drehelastische Kupplungsscheibe bekannt, wobei ein die Reibbeläge tragender Scheibenteil begrenzt drehbar und federnd mit einem Nabenteil über Wälzkörper, z. B. Kugeln in Verbindung steht. Die Wälzkörper sind in sektorförmigen Taschen angeordnet, die von Ausnehmungen im Scheibenteil und in Zwischenstücken, die drehfest und axial federnd mit dem Nabenteil verbunden sind, gebildet werden. Als Federelemente sind Tellerfedern oder ein Gummiring vorgesehen.

Aus der DE 2 063 370 A1 ist eine drehelastische Kupplungsscheibe bekannt, bei dem ein sich in der radialen Richtung ausgehend von den Reibbelägen erstreckender Steg Taschen mit darin angeordneten Wälzkörpern aufweist. An der Nabe stützen sich tellerfederartige Federn ab, die mit den Wälzkörpern und den Taschen zusammenwirken. Die Scheiben werden im Bereich der Nabe an außenliegenden Scheiben abgestützt. Die Scheiben weisen Bahnen auf, die ballig abgedreht sind.

Aus der DE 3 500 920 A1 ist eine drehelastische Kupplungsscheibe beschrieben, bei der ein Rampensystem eine Elastizität aufbaut, wobei eine Dämpfung durch Öl entsteht. Das Rampensystem wird an Tellerfedern abgebildet, zusätzlich unterstützen Druckfedern die Tellerfedern in der axialen Richtung.

In der DE 10 2015 211 899 A1 A1 ist ein Torsionsschwingungsdämpfer in Form eines Pendelwippendämpfers (PWD) offenbart. Die dort als Zwischenelemente bezeichneten Pendelwippen betätigen Energiespeicher, während sie über in entsprechenden Bahnen abrollende oder gleitende Wälzkörper relativ zu Eingangsteil und Ausgangsteil geführt werden. Hierdurch resultiert bei Verdrehung des Eingangsteils zum Ausgangsteil um die Achse eine Torsionsdämpferkennlinie, deren Steigung mittels der Form der Bahnen variabel gestaltet werden kann.

Ferner ist aus der WO 2010/012078 A1 ein Torsionsschwingungsdämpfer bekannt, der auf den Oberbegriff des Anspruchs 1 lesbar ist.

Aufgabe der vorliegenden Erfindung ist es, die mit Bezug auf den Stand der Technik angeführten Probleme zumindest teilweise zu lösen. Insbesondere soll ein Torsionsschwingungsdämpfer vorgeschlagen werden, bei dem Energiespeicherelemente insbesondere außerhalb eines Drehmomentflusses angeordnet sind, Tellerfedern nach Möglichkeit nicht eingesetzt und Wälzkörper mit einer größeren Kontaktfläche verwendet werden.

Zur Lösung dieser Aufgaben trägt ein Torsionsschwingungsdämpfer mit den Merkmalen gemäß Patentanspruch 1 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Die Erfindung betrifft einen Torsionsschwingungsdämpfer zumindest umfassend ein Eingangsteil und ein Ausgangsteil mit einer gemeinsamen, sich entlang einer axialen Richtung erstreckenden Drehachse. Das Eingangsteil und das Ausgangsteil sind bei Übertragung eines Drehmoments (z. B. Einleitung über das Eingangsteil hin zum Ausgangsteil und Weiterleitung über das Ausgangsteil; oder umgekehrt) entlang einer Umfangsrichtung relativ zueinander begrenzt verdrehbar. Der Torsionsschwingungsdämpfer weist zumindest ein Rampensystem mit Wälzkörpern auf, durch das eine relative Verdrehung von Eingangsteil und Ausgangsteil in eine Verlagerung entlang der axialen Richtung zumindest eines Bauteils des Torsionsschwingungsdämpfers umsetzbar ist. Der Torsionsschwingungsdämpfer weist eine Mehrzahl von Energiespeicherelementen auf, wobei alle Energiespeicherelemente des Torsionsschwingungsdämpfers entlang der Umfangsrichtung (gleichmäßig) verteilt (und voneinander beabstandet) angeordnet und sich jeweils entlang der axialen Richtung erstrecken und in der axialen Richtung elastisch verformbar sind.

Das zumindest eine Rampensystem ist zwischen Eingangsteil und Ausgangsteil so ausgeführt, dass eine relative Verdrehung von Eingangsteil und Ausgangsteil in eine Verlagerung entlang der axialen Richtung zumindest eines Bauteils des Torsionsschwingungsdämpfers umsetzbar ist. Über das zumindest eine Bauteil können die Energiespeicherelemente in der axialen Richtung elastisch verformt werden.

Insbesondere sind Eingangsteil und Ausgangsteil axialfest (zueinander) angeordnet, so dass die Verlagerung über ein anderes Bauteil auf die Energiespeicherelemente übertragen wird.

Insbesondere weist der Torsionsschwingungsdämpfer keine Tellerfedern als Energiespeicherelemente auf, die über die Rampensysteme verspannbar sind.

Insbesondere wälzen die Wälzkörper ausschließlich entlang der Umfangsrichtung. Eine Drehachse (Wälzachse) jedes Wälzkörpers verläuft insbesondere entlang der radialen Richtung oder gegenüber der axialen Richtung hin zur radialen Richtung geneigt.

Erfindungsgemäß weist das zumindest eine Rampensystem Kegelrollen oder konische Pendelrollen als Wälzkörper auf. Insbesondere ist die Spitze eines von einer Manteloberfläche gebildeten Kegels des als Kegelrolle ausgeführten Wälzkörpers auf der Drehachse angeordnet. Weiter werden Pendelrollen für ein Rampensystem vorgeschlagen, deren Manteloberflächen insbesondere auf einem gemeinsamen Kreisradius angeordnet sind.

Insbesondere kann so gewährleistet werden, dass bei einem Abrollen der Wälzkörper in dem Rampensystem eine Bewegung der Wälzkörper entlang der Umfangsrichtung erfolgt.

Insbesondere sind die Energiespeicherelemente als Druckfedern ausgeführt.

Insbesondere werden als Energiespeicherelemente ausschließlich Druckfedern eingesetzt.

Erfindungsgemäß sind eine erste Gruppe von Wälzkörpern auf einem ersten Durchmesser in einem ersten Rampensystem und eine zweite Gruppe von Wälzkörpern auf einem (von dem ersten Durchmesser abweichenden) zweiten Durchmesser in einem zweiten Rampensystem angeordnet.

Insbesondere umfasst die erste Gruppe und die zweite Gruppe voneinander unterschiedliche oder zueinander identische Wälzkörper. Insbesondere ist das erste Rampensystem durch das Eingangsteil und eine sich entlang der Umfangsrichtung um die Drehachse erstreckende erste Scheibe gebildet, wobei die erste Gruppe (von Wälzkörpern) zwischen dem Eingangsteil und der ersten Scheibe angeordnet ist. Das zweite Rampensystem ist durch das Ausgangsteil und die erste Scheibe gebildet, wobei die zweite Gruppe (von Wälzkörpern) zwischen dem Ausgangsteil und der ersten Scheibe angeordnet ist. Die erste Scheibe ist das entlang der axialen Richtung verlagerbare Bauteil.

Insbesondere ist jedes Rampensystem durch erste Rampen und zweite Rampen gebildet, wobei jeweils ein Wälzkörper zwischen jeweils einer ersten Rampe und einer zweiten Rampe, die eine Rampenpaarung bilden, angeordnet ist. Erste Rampen und zweite Rampen sind jeweils an einer Komponente des Torsionsschwingungsdämpfers ausgebildet. Die ersten Rampen und die zweiten Rampen sind entlang der Umfangsrichtung verteilt an der jeweiligen Komponente angeordnet.

Insbesondere ist bei der ersten Gruppe eine Mehrzahl von ersten Rampen an dem Eingangsteil ausgebildet. Die zweiten Rampen der ersten Gruppe sind auf der ersten Scheibe ausgebildet.

Insbesondere ist bei der zweiten Gruppe eine Mehrzahl von ersten Rampen an dem Ausgangsteil ausgebildet. Die zweiten Rampen der zweiten Gruppe sind auf der ersten Scheibe ausgebildet.

Wird z. B. ein Drehmoment über das Eingangsteil in den Torsionsschwingungsdämpfer eingeleitet, so werden infolge eines vorliegenden Drehmomentgradienten über dem Torsionsschwingungsdämpfer die Wälzkörper aus einer Ruhelage der jeweiligen Rampenpaarung entlang der Umfangsrichtung und entlang der Rampensteigung entlanggewälzt. Aufgrund des geometrischen Zusammenhangs der Rampenpaarung wird die erste Scheibe gegenüber dem Eingangsteil bzw. dem Ausgangsteil entlang der axialen Richtung verlagert, wobei eine entgegenstehende Kraft der Energiespeicherelemente überwunden wird. Bei einem Absinken des Drehmomentgradienten wälzen die Wälzkörper zurück in Richtung der Ruhelage, wobei die Energiespeicherelemente entlastet bzw. zumindest teilweise entspannt werden.

Mit dieser drehmomentbedingten Bewegung zwingt der Wälzkörper der ersten Scheibe eine relative Bewegung entlang der axialen Richtung auf und die Energiespeicherelemente werden entsprechend gespannt. Tritt eine Änderung des anliegenden Drehmoments und einhergehend eine Drehzahldifferenz zwischen dem Eingangsteil und dem Ausgangsteil auf, wie beispielsweise bei einer Torsionsschwingung, so steht dem die Trägheit des jeweils anderen von Eingangsteil und Ausgangsteil entgegen und der jeweilige Wälzkörper wälzt (in vorbestimmter Weise) entlang der Rampen um die dem anliegenden Drehmoment entsprechende Lage hin und her. Dabei arbeitet der jeweilige Wälzkörper den von einem Drehmomentbetrag abhängig gespannten Energiespeicherelementen entgegen, sodass eine Eigenfrequenz im Vergleich zu einer Ruhelage beziehungsweise einer Drehmomentübertragung ohne Torsionsschwingungsdämpfer (aber gleicher mitbewegter Schwungmasse) verändert ist.

Insbesondere ist vorgesehen, dass die jeweilige Rampenpaarung eine Zugmomentpaarung mit einer ersten Übersetzungskurve und eine Schubmomentpaarung mit einer zweiten Übersetzungskurve umfasst, wobei die Zugmomentpaarung zur Drehmomentübertragung von dem Eingangsteil hin zum Ausgangsteil eingerichtet ist und die Schubmomentpaarung zur Drehmomentübertragung von dem Ausgangsteil hin zum Eingangsteil eingerichtet ist. Insbesondere weisen die erste Übersetzungskurve und die zweite Übersetzungskurve zumindest bereichsweise voneinander unterschiedliche Übersetzungsverläufe auf.

Grundsätzlich unterscheiden sich ein Zugmoment und ein Schubmoment in einem theoretischen Anwendungsfall nicht. Die Begriffe sind daher neutral zu sehen und dienen einzig einer einfachen Unterscheidbarkeit der bezeichneten Drehmomentübertragungsrichtung. Diese Begriffe sind den üblichen Bezeichnungen in einem Antriebsstrang eines Kraftfahrzeugs entnommen, aber für andere Anwendungen entsprechend übertragbar.

Insbesondere weisen die erste Übersetzungskurve und die zweite Übersetzungskurve, die jeweils von einem gemeinsamen Punkt der Ruhelage beginnen, unterschiedliche Übersetzungsverläufen auf. Die Steifigkeitseigenschaften des Torsionsschwingungsdämpfers sind daher individuell für ein Zugmoment und ein Schubmoment (unterschiedlich) einrichtbar.

In einer Ausführungsform ist beispielsweise für das Übertragen eines Zugmoments ein größeres Dämpfungsmoment erforderlich, was entsprechend über einen größeren Verdrehwinkel (ein geringeres Untersetzungsverhältnis, also kleinerer Nenner des Übersetzungsverhältnisses) erreichbar ist als dies für ein Schubmoment (ein größeres Untersetzungsverhältnis) erwünscht ist. Weiterhin ist beispielsweise eine progressive oder degressive Schwingungsdämpfung oder sogar eine mehrfach veränderliche Schwingungsdämpfung erwünscht. Beispielsweise ist für den leerlaufnahen Bereich ein geringer Dämpfungsmomentanstieg und für ein Hauptlastdrehmoment ein steiler Dämpfungsmomentanstieg, der sich wieder zunehmend degressiv verringert und bis zu einem Maximalbetrag eines übertragbaren Drehmoments wieder progressiver erhöht, eingerichtet.

Insbesondere umfasst jede Gruppe zwei Reihen von Wälzkörpern, wobei eine erste Reihe von Wälzkörpern auf einer ersten Seite des Eingangsteils und des Ausgangssteils mit der ersten Scheibe zusammenwirken. Eine zweite Reihe von Wälzkörpern wirken auf einer der ersten Seite entlang der axialen Richtung gegenüberliegenden zweiten Seite mit einer eine sich entlang der Umfangsrichtung um die Drehachse erstreckenden zweiten Scheibe zusammen. Auch die zweite Scheibe ist das entlang der axialen Richtung verlagerbare Bauteil bzw. bildet also ein weiteres Bauteil, dass bei einem auftretenden Drehmomentgradienten entlang der axialen Richtung verlagert wird.

Das Eingangsteil weist dann für jede Reihe der ersten Gruppe erste Rampen auf. Die ersten Rampen sind an der ersten Seite und an der zweiten Seite des Eingangsteils ausgebildet.

Neben der ersten Scheibe (für die erste Reihe und die erste Gruppe) weist dann auch die zweite Scheibe für die zweite Reihe (und die erste Gruppe) zweite Rampen auf.

Auch das Ausgangsteil weist dann für jede Reihe der zweiten Gruppe erste Rampen auf. Die ersten Rampen sind an der ersten Seite und an der zweiten Seite des Ausgangsteils ausgebildet.

Neben der ersten Scheibe (für die erste Reihe und die zweite Gruppe) weist dann auch die zweite Scheibe für die zweite Reihe (und die zweite Gruppe) zweite Rampen auf.

Insbesondere ist die zweite Scheibe an einem ersten Ende zumindest eines Verbindungselements axialfest angeordnet ist. Das zumindest eine Verbindungselement erstreckt sich ausgehend von dem ersten Ende entlang der axialen Richtung durch die erste Scheibe bis hin zu einem zweiten Ende. Die Mehrzahl von Energiespeicherelementen sind zwischen dem zweiten Ende und der ersten Scheibe angeordnet.

Bei Auftreten eines Drehmomentgradienten wird einerseits die erste Scheibe entlang der axialen Richtung (entlang einer ersten axialen Richtung) verlagert. Gleichzeitig wird die zweite Scheibe entlang der axialen Richtung (entlang einer der ersten axialen Richtung entgegengesetzten zweiten axialen Richtung) verlagert. Über die zweite Scheibe werden das erste Ende und das zweite Ende des Verbindungselements entlang der axialen Richtung (entlang der zweiten axialen Richtung) verlagert, so dass die Energiespeicherelemente beidseitig, also durch die erste Scheibe und über das zweite Ende, komprimiert werden.

Insbesondere ist eine Mehrzahl von Verbindungselementen vorgesehen, die entlang der Umfangsrichtung verteilt (und voneinander beabstandet) angeordnet sind, wobei an dem zweiten Ende eine sich entlang der Umfangsrichtung um die Drehachse erstreckende dritte Scheibe axialfest anordnet ist, an der sich die Mehrzahl von Energiespeicherelementen gegenüber der axialen Richtung abstützen.

Insbesondere ist die Mehrzahl von Energiespeicherelementen (und die Mehrzahl von Verbindungselementen) zumindest entlang der axialen Richtung gegenüber dem Eingangsteil und dem Ausgangsteil verlagerbar (also nicht axialfest gegenüber dem Eingangsteil und dem Ausgangsteil angeordnet) oder entlang der Umfangsrichtung gegenüber dem Eingangsteil und dem Ausgangsteil verdrehbar (also nicht rotationsfest gegenüber dem Eingangsteil und dem Ausgangsteil) angeordnet (oder beides).

Das zumindest eine Verbindungselement ist insbesondere über eine Schraube oder einen Nietverbindung mit der zweiten Scheibe und/oder mit der dritten Scheibe verbunden. Insbesondere bildet das erste Ende und/oder das zweite Ende eine Nietverbindung mit der jeweiligen Scheibe.

Insbesondere dient das zumindest eine Verbindungselement als Führung für das Energiespeicherelement. Insbesondere erstreckt sich das Verbindungselement also entlang der axialen Richtung durch das Energiespeicherelement hindurch.

Insbesondere ist der Torsionsschwingungsdämpfer innerhalb eines Gehäuses angeordnet. Insbesondere ist der Torsionsschwingungsdämpfer über das Gehäuse getrennt von weiteren Komponenten anordenbar. Insbesondere können Dichtungen vorgesehen sein, über die der Torsionsschwingungsdämpfer innerhalb des Gehäuses fluiddicht angeordnet werden kann. Insbesondere ist der Torsionsschwingungsdämpfer innerhalb des Gehäuses mit Öl oder Fett geschmiert.

Insbesondere sind die Wälzkörper und/oder die Rampen vergütet ausgeführt.

Insbesondere bestehen die Wälzkörper aus 100Cr6.

Insbesondere bestehen die Rampen aus einsatzgehärtetem Stahl.

Insbesondere ist für jede Gruppe von Wälzkörpern ein eigener Käfig vorgesehen.

Insbesondere ist für jede Reihe von Wälzkörpern ein eigener Käfig vorgesehen.

Insbesondere ist ein gemeinsamer Käfig für beide Gruppen einer Reihe von Wälzkörpern vorgesehen.

Insbesondere ist ein gemeinsamer Käfig für beide Reihen einer Gruppe von Wälzkörpern vorgesehen.

Insbesondere ist ein gemeinsamer Käfig für alle Wälzkörper vorgesehen.

Über einen Käfig können die Wälzkörper in relativ zueinander beabstandeten und festgelegten Positionen fixiert werden.

Insbesondere weist der Torsionsschwingungsdämpfer eine größte Länge (L) entlang der axialen Richtung und einen größten Durchmesser (D) entlang der radialen Richtung (quer zur axialen Richtung) auf. Insbesondere wird der größte Durchmesser durch das Eingangsteil und/oder durch das Gehäuse und die größte Länge durch das Ausgangsteil und/oder durch das Gehäuse gebildet. Insbesondere werden dabei keine mit dem Eingangsteil drehmomentübertragende (Reib-)Beläge berücksichtigt. Insbesondere ist die größte Länge größer als der größte Durchmesser * 0,3; also L > D * 0,3; insbesondere gilt L > D * 0,5.

Es wird weiter eine Komponente (z. B. eine Verbrennungskraftmaschine, eine Reibungskupplung, eine elektrische Maschine, ein Generator, ein Zweimassenschwinger, etc.) eines Antriebsstrangs vorgeschlagen, die den vorstehend beschriebenen Torsionsschwingungsdämpfer aufweist.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben.

Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: einen Antriebsstrang mit einer Verbrennungskraftmaschine, einem Generator und einer elektrischen Maschine, wobei die möglichen Positionen zur Anordnung eines Torsionsschwingungsdämpfers dargestellt sind;
- Fig. 2:: einen Torsionsschwingungsdämpfer in einer Ansicht entlang der Drehachse;
- Fig. 3:: den Torsionsschwingungsdämpfer nach Fig. 2 in einer Seitenansicht im Schnitt entlang der Linie III-III gemäß Fig. 2;
- Fig. 4:: den Torsionsschwingungsdämpfer nach Fig. 2 und 3 in einer Ansicht entlang der Drehachse, im Schnitt entlang der Linie IV-IV gemäß Fig. 5;
- Fig. 5:: den Torsionsschwingungsdämpfer nach Fig. 2 bis 4 in einer Seitenansicht im Schnitt entlang der Linie V-V gemäß Fig. 4;
- Fig. 6:: den Torsionsschwingungsdämpfer nach Fig. 2 bis 5 in einer Seitenansicht im Schnitt entlang der Linie VI-VI gemäß Fig. 4;
- Fig. 7:: ein Detail VII gemäß Fig. 6 des Torsionsschwingungsdämpfers nach Fig. 2 bis 6;
- Fig. 8:: ein Detail VIII gemäß Fig. 3 des Torsionsschwingungsdämpfers nach Fig. 2 bis 6;
- Fig. 9:: ein Pendelrollenlager für den Torsionsschwingungsdämpfer in einer Seitenansicht im Schnitt;
- Fig. 10:: das Pendelrollenlager nach Fig. 9 in einer verschwenkten Anordnung; und
- Fig. 11:: ein Kegelrollenlager für den Torsionsschwingungsdämpfer in einer Seitenansicht im Schnitt.

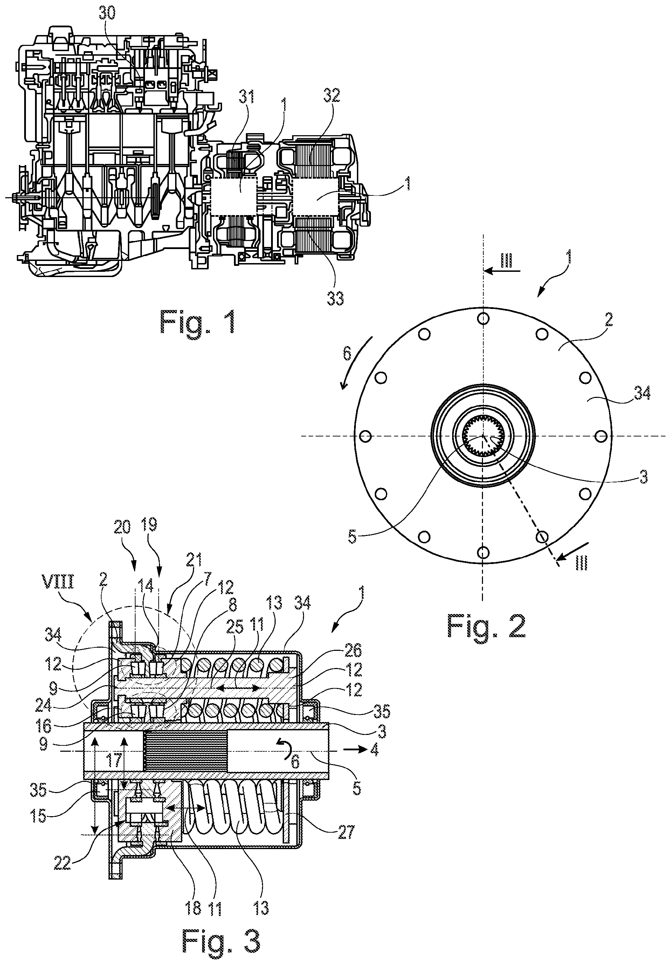

Die Fig. 1 zeigt einen Antriebsstrang mit einer Verbrennungskraftmaschine 30, einem Generator 31 und einer elektrischen Maschine 32, wobei die möglichen Positionen zur Anordnung eines Torsionsschwingungsdämpfers 1 dargestellt sind. Bei der elektrischen Maschine 32 kann der Torsionsschwingungsdämpfer 1 innerhalb des Rotors 33 angeordnet werden.

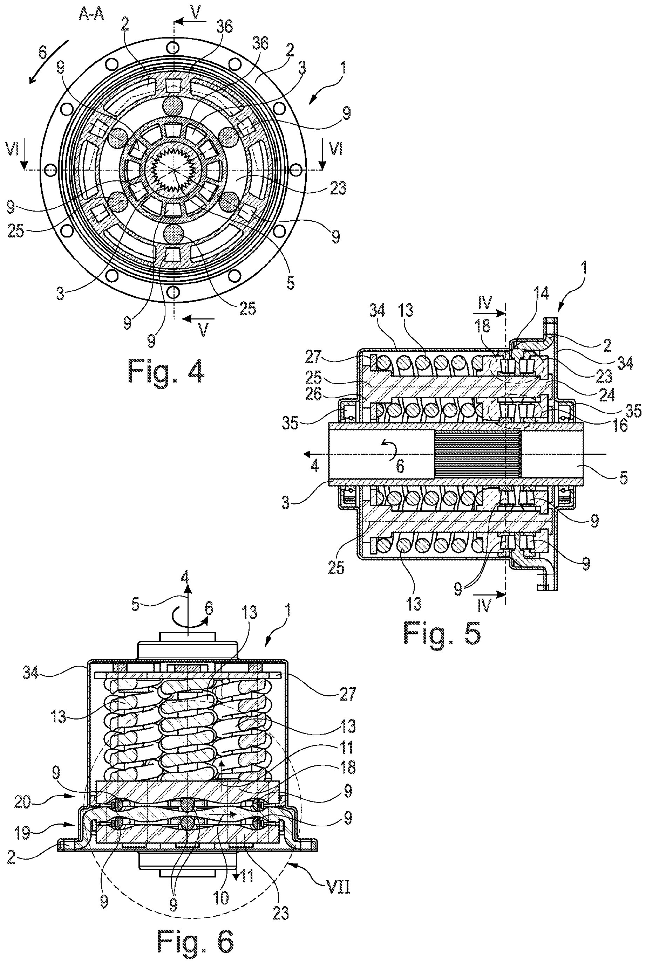

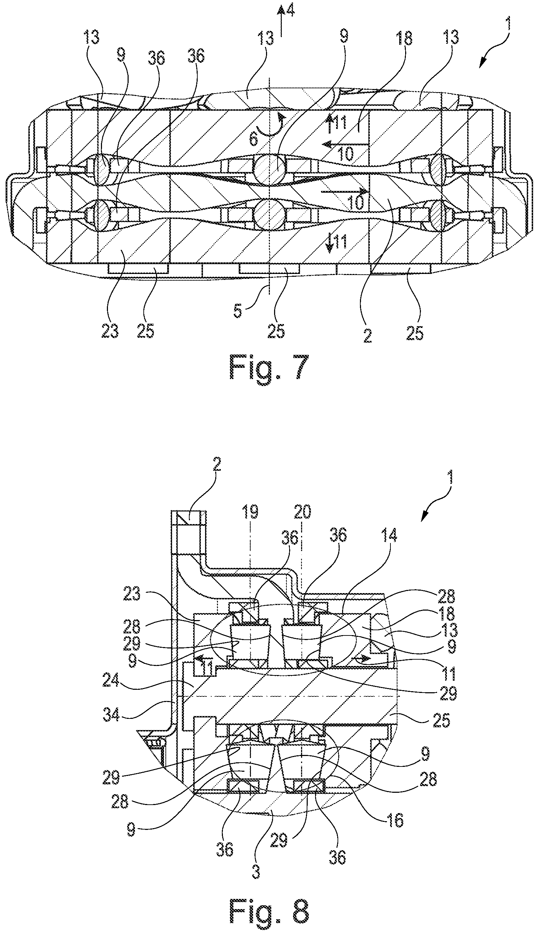

Fig. 2 zeigt einen Torsionsschwingungsdämpfer 1 in einer Ansicht entlang der Drehachse 5. Fig. 3 zeigt den Torsionsschwingungsdämpfer 1 nach Fig. 2 in einer Seitenansicht im Schnitt entlang der Linie III-III gemäß Fig. 2. Fig. 4 zeigt den Torsionsschwingungsdämpfer 1 nach Fig. 2 und 3 in einer Ansicht entlang der Drehachse 5, im Schnitt entlang der Linie IV-IV gemäß Fig. 5. Fig. 5 zeigt den Torsionsschwingungsdämpfer 1 nach Fig. 2 bis 4 in einer Seitenansicht im Schnitt entlang der Linie V-V gemäß Fig. 4. Fig. 6 zeigt den Torsionsschwingungsdämpfer 1 nach Fig. 2 bis 5 in einer Seitenansicht im Schnitt entlang der Linie VI-VI gemäß Fig. 4. Fig. 7 zeigt ein Detail VII gemäß Fig. 6 des Torsionsschwingungsdämpfers 1 nach Fig. 2 bis 6. Fig. 8 zeigt ein Detail VIII gemäß Fig. 3 des Torsionsschwingungsdämpfers 1 nach Fig. 2 bis 6. Die Fig. 2 bis 8 werden im Folgenden gemeinsam beschrieben.

Der Torsionsschwingungsdämpfer umfasst ein Eingangsteil 2 und ein Ausgangsteil 3 mit einer gemeinsamen, sich entlang einer axialen Richtung 4 erstreckenden Drehachse 5. Das Eingangsteil 2 und das Ausgangsteil 3 sind bei Übertragung eines Drehmoments (z. B. Einleitung über das Eingangsteil 2 hin zum Ausgangsteil 3 und Weiterleitung über das Ausgangsteil 3; oder umgekehrt) entlang einer Umfangsrichtung 6 relativ zueinander begrenzt verdrehbar. Der Torsionsschwingungsdämpfer 1 weist zwei Rampensysteme 7, 8 mit Wälzkörpern 9 auf, durch die eine relative Verdrehung 10 von Eingangsteil 2 und Ausgangsteil 3 in eine Verlagerung 11 entlang der axialen Richtung 4 zumindest eines Bauteils 12 (der ersten Scheibe 18, der zweiten Scheibe 23, des Verbindungselements 25, der dritten Scheibe 27) des Torsionsschwingungsdämpfers 1 umsetzbar ist. Der Torsionsschwingungsdämpfer 1 weist eine Mehrzahl von Energiespeicherelementen 13 auf, wobei alle Energiespeicherelemente 13 des Torsionsschwingungsdämpfers 1 entlang der Umfangsrichtung 6 gleichmäßig verteilt und voneinander beabstandet angeordnet und sich jeweils entlang der axialen Richtung 4 erstrecken und in der axialen Richtung 4 elastisch verformbar sind.

Das Eingangsteil 2 und das Ausgangsteil 3 sind axialfest zueinander angeordnet, so dass die Verlagerung 11 über ein anderes Bauteil 12 auf die Energiespeicherelemente 13 übertragen wird.

Die Rampensysteme 7, 8 weisen Kegelrollen als Wälzkörper 9 auf. Die Energiespeicherelemente 13 sind als Druckfedern ausgeführt.

Eine erste Gruppe 14 von Wälzkörpern 9 ist auf einem ersten Durchmesser 15 in einem ersten Rampensystem 7 und eine zweite Gruppe 16 von Wälzkörpern 9 auf einem (von dem ersten Durchmesser 15 abweichenden) zweiten Durchmesser 17 in einem zweiten Rampensystem 8 angeordnet.

Die erste Gruppe 14 und die zweite Gruppe 16 weisen voneinander unterschiedliche Wälzkörper 9 auf.

Das erste Rampensystem 7 ist durch das Eingangsteil 2 und eine sich entlang der Umfangsrichtung 6 um die Drehachse 5 erstreckende erste Scheibe 18 gebildet, wobei die erste Gruppe 14 zwischen dem Eingangsteil 2 und der ersten Scheibe 18 angeordnet ist. Das zweite Rampensystem 8 ist durch das Ausgangsteil 3 und die erste Scheibe 18 gebildet, wobei die zweite Gruppe 16 zwischen dem Ausgangsteil 3 und der ersten Scheibe 18 angeordnet ist. Die erste Scheibe 18 ist eins der entlang der axialen Richtung 4 verlagerbaren Bauteile 12.

Jedes Rampensystem 7, 8 ist durch erste Rampen 28 und zweite Rampen 29 gebildet, wobei jeweils ein Wälzkörper 9 zwischen jeweils einer ersten Rampe 28 und einer zweiten Rampe 29, die eine Rampenpaarung bilden, angeordnet ist. Bei der ersten Gruppe 14 ist eine Mehrzahl von ersten Rampen 28 an dem Eingangsteil 2 ausgebildet. Die zweiten Rampen 29 der ersten Gruppe 14 sind auf der ersten Scheibe 18 ausgebildet. Bei der zweiten Gruppe 16 ist eine Mehrzahl von ersten Rampen 28 an dem Ausgangsteil 3 ausgebildet. Die zweiten Rampen 29 der zweiten Gruppe 16 sind auf der ersten Scheibe 16 ausgebildet.

Jede Gruppe 14, 16 umfasst zwei Reihen 19, 20 von Wälzkörpern 9, wobei eine erste Reihe 19 von Wälzkörpern 9 auf einer ersten Seite 21 des Eingangsteils 2 und des Ausgangsteils 3 mit der ersten Scheibe 18 zusammenwirken. Eine zweite Reihe 20 von Wälzkörpern 9 wirken auf einer der ersten Seite 21 entlang der axialen Richtung 4 gegenüberliegenden zweiten Seite 22 mit einer eine sich entlang der Umfangsrichtung 6 um die Drehachse 5 erstreckenden zweiten Scheibe 23 zusammen. Auch die zweite Scheibe 23 ist ein entlang der axialen Richtung 4 verlagerbares Bauteil 12.

Das Eingangsteil 2 weist für jede Reihe 19, 20 der ersten Gruppe 14 erste Rampen 28 auf. Die ersten Rampen 28 sind an der ersten Seite 21 und an der zweiten Seite 22 des Eingangsteils 2 ausgebildet.

Neben der ersten Scheibe 18 (für die erste Reihe 19 und die erste Gruppe 14) weist auch die zweite Scheibe 23 für die zweite Reihe 20 und die erste Gruppe 14 zweite Rampen 29 auf.

Das Ausgangsteil 3 weist für jede Reihe 19, 20 der zweiten Gruppe 16 erste Rampen 28 auf. Die ersten Rampen 28 sind an der ersten Seite 21 und an der zweiten Seite 22 des Ausgangsteils ausgebildet

Neben der ersten Scheibe 18 für die erste Reihe 19 und die zweite Gruppe 16 weist auch die zweite Scheibe 23 für die zweite Reihe 20 und die zweite Gruppe 16 zweite Rampen 29 auf.

Die zweite Scheibe 23 ist an einem ersten Ende 24 eines Verbindungselements 25 axialfest angeordnet. Das Verbindungselement 25 erstreckt sich ausgehend von dem ersten Ende 24 entlang der axialen Richtung 4 durch die erste Scheibe 18 bis hin zu einem zweiten Ende 26. An dem zweiten Ende 26 ist eine dritte Scheibe 27 axialfest angeordnet. Die Mehrzahl von Energiespeicherelementen 13 sind entlang der axialen Richtung 4 zwischen dem zweiten Ende 26 bzw. der dritten Scheibe 27 und der ersten Scheibe 18 angeordnet.

Bei Auftreten eines Drehmomentgradienten wird einerseits die erste Scheibe 18 entlang der axialen Richtung 4 (entlang einer ersten axialen Richtung) verlagert. Gleichzeitig wird die zweite Scheibe 23 entlang der axialen Richtung 4 (entlang einer der ersten axialen Richtung entgegengesetzten zweiten axialen Richtung) verlagert. Über die zweite Scheibe 23 werden das erste Ende 24 und das zweite Ende 26 des Verbindungselements 25 entlang der axialen Richtung 4 (entlang der zweiten axialen Richtung) verlagert, so dass die Energiespeicherelemente 13 beidseitig, also durch die erste Scheibe 18 und über das zweite Ende 26 bzw. die dritte Scheibe 27, komprimiert werden.

Die Mehrzahl von Energiespeicherelementen 13 und die Mehrzahl von Verbindungselementen 25 sind entlang der axialen Richtung 4 gegenüber dem Eingangsteil 2 und dem Ausgangsteil 3 verlagerbar (also nicht axialfest gegenüber dem Eingangsteil 2 und dem Ausgangsteil 3 angeordnet) und entlang der Umfangsrichtung 6 gegenüber dem Eingangsteil 2 und dem Ausgangsteil 3 verdrehbar (also nicht rotationsfest gegenüber dem Eingangsteil 2 und dem Ausgangsteil 3) angeordnet.

Das Verbindungselement 25 ist über eine Nietverbindung mit der zweiten Scheibe 23 verbunden. Dabei bildet das erste Ende 24 eine Nietverbindung mit der zweiten Scheibe 23.

Das Verbindungselement 25 dient als Führung für das Energiespeicherelement 13. Das Verbindungselement 25 erstreckt sich entlang der axialen Richtung 4 durch das Energiespeicherelement 13 hindurch.

Der Torsionsschwingungsdämpfer 1 ist innerhalb eines Gehäuses 34 angeordnet. Über das Gehäuse 34 ist er getrennt von weiteren Komponenten anordenbar. Es sind Dichtungen 35 vorgesehen, über die der Torsionsschwingungsdämpfer 1 innerhalb des Gehäuses 34 fluiddicht angeordnet ist.

Für jede Gruppe 14, 16 und jede Reihe 19, 20 von Wälzkörpern 9 ist jeweils ein eigener Käfig 36 vorgesehen.

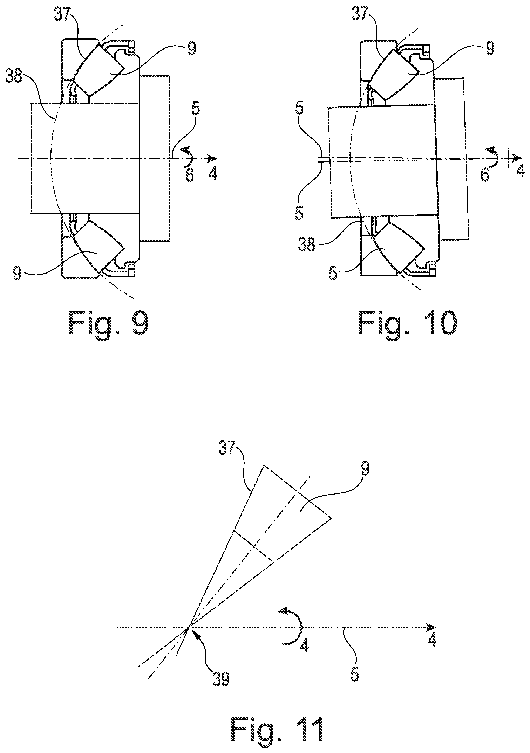

Fig. 9 zeigt ein Pendelrollenlager für den Torsionsschwingungsdämpfer 1 in einer Seitenansicht im Schnitt. Fig. 10 zeigt das Pendelrollenlager nach Fig. 9 in einer verschwenkten Anordnung, wobei die Drehachsen 5 zueinander verkippt sind. Die Fig. 9 und 10 werden im Folgenden gemeinsam beschrieben.

Die Wälzkörper 9 sind als konische Pendelrollen ausgeführt, deren Manteloberflächen 37 auf einem gemeinsamen Kreisradius 38 angeordnet sind.

Fig. 11 zeigt ein Kegelrollenlager für den Torsionsschwingungsdämpfer 1 in einer Seitenansicht im Schnitt. Die Spitze 39 eines von einer Manteloberfläche 37 gebildeten Kegels des als Kegelrolle ausgeführten Wälzkörpers 9 ist auf der Drehachse 5 angeordnet.

## Patentansprüche

1. Torsionsschwingungsdämpfer (1) zumindest umfassend ein Eingangsteil (2) und ein Ausgangsteil (3) mit einer gemeinsamen sich entlang einer axialen Richtung (4) erstreckenden Drehachse (5), wobei das Eingangsteil (2) und das Ausgangsteil (3) bei Übertragung eines Drehmoments entlang einer Umfangsrichtung (6) relativ zueinander begrenzt verdrehbar sind, wobei der Torsionsschwingungsdämpfer (1) zumindest ein Rampensystem (7, 8) mit Wälzkörpern (9) aufweist, durch das eine relative Verdrehung (10) von Eingangsteil (2) und Ausgangsteil (3) in eine Verlagerung (11) entlang der axialen Richtung (4) zumindest eines Bauteils (12) des Torsionsschwingungsdämpfers (1) umsetzbar ist, wobei der Torsionsschwingungsdämpfer (1) eine Mehrzahl von Energiespeicherelementen (13) aufweist, wobei alle Energiespeicherelemente (13) des Torsionsschwingungsdämpfers (1) entlang der Umfangsrichtung (6) verteilt angeordnet sind und sich jeweils entlang der axialen Richtung (4) erstrecken und in der axialen Richtung (4) elastisch verformbar sind, wobei eine erste Gruppe (14) von Wälzkörpern (9) auf einem ersten Durchmesser (15) in einem ersten Rampensystem (7) und eine zweite Gruppe (16) von Wälzkörpern (9) auf einem von dem ersten Durchmesser abweichenden zweiten Durchmesser (17) in einem zweiten Rampensystem (8) angeordnet sind, **dadurch gekennzeichnet, dass** beide Rampensysteme (7, 8) Kegelrollen oder konische Pendelrollen als Wälzkörper (9) aufweist.

2. Torsionsschwingungsdämpfer (1) nach Anspruch 1, wobei die Energiespeicherelemente (13) als Druckfedern ausgeführt sind.

3. Torsionsschwingungsdämpfer (1) nach Anspruch 1 oder 2, wobei die erste Gruppe (14) und die zweite Gruppe (16) voneinander unterschiedliche oder identische Wälzkörper (9) umfasst.

4. Torsionsschwingungsdämpfer (1) nach einem der vorhergehenden Ansprüche, wobei das erste Rampensystem (7) durch das Eingangsteil (2) und eine sich entlang der Umfangsrichtung (6) um die Drehachse (5) erstreckende erste Scheibe (18) gebildet ist, wobei die erste Gruppe (14) zwischen dem Eingangsteil (2) und der ersten Scheibe (18) angeordnet ist; wobei das zweite Rampensystem (8) durch das Ausgangsteil (3) und die erste Scheibe (18) gebildet ist, wobei die zweite Gruppe (16) zwischen dem Ausgangsteil (3) und der ersten Scheibe (18) angeordnet ist; wobei die erste Scheibe (18) das entlang der axialen Richtung (4) verlagerbare Bauteil (12) ist.

5. Torsionsschwingungsdämpfer (1) nach Anspruch 4, wobei jede Gruppe (14, 16) zwei Reihen (19, 20) von Wälzkörpern (9) umfasst, wobei eine erste Reihe (19) von Wälzkörpern (9) auf einer ersten Seite (21) des Eingangsteils (2) und des Ausgangsteils (3) mit der ersten Scheibe (18) zusammenwirken; wobei eine zweite Reihe (20) von Wälzkörpern (9) auf einer der ersten Seite (21) entlang der axialen Richtung (4) gegenüberliegenden zweiten Seite (22) mit einer eine sich entlang der Umfangsrichtung (6) um die Drehachse (5) erstreckenden zweiten Scheibe (23) zusammenwirkt, wobei auch die zweite Scheibe (23) das entlang der axialen Richtung (4) verlagerbare Bauteil (12) ist.

6. Torsionsschwingungsdämpfer (1) nach Anspruch 5, wobei die zweite Scheibe (23) an einem ersten Ende (24) zumindest eines Verbindungselements (25) axialfest angeordnet ist; wobei sich das Verbindungselement (25) ausgehend von dem ersten Ende (24) entlang der axialen Richtung (4) durch die erste Scheibe (18) bis hin zu einem zweiten Ende (26) erstreckt, wobei die Mehrzahl von Energiespeicherelementen (13) zwischen dem zweiten Ende (26) und der ersten Scheibe (18) angeordnet sind.

7. Torsionsschwingungsdämpfer (1) nach Anspruch 6, wobei eine Mehrzahl von Verbindungselementen (25) vorgesehen sind, die entlang der Umfangsrichtung (6) verteilt angeordnet sind, wobei an dem zweiten Ende (26) eine sich entlang der Umfangsrichtung (6) um die Drehachse (5) erstreckende dritte Scheibe (27) axialfest anordnet ist, an der sich die Mehrzahl von Energiespeicherelementen (13) gegenüber der axialen Richtung (4) abstützen.

8. Torsionsschwingungsdämpfer (1) nach einem der vorhergehenden Ansprüche, wobei die Mehrzahl von Energiespeicherelementen (13) zumindest entlang der axialen Richtung (4) gegenüber dem Eingangsteil (2) und dem Ausgangsteil (3) verlagerbar oder entlang der Umfangsrichtung (7) gegenüber dem Eingangsteil (2) und dem Ausgangsteil (3) verdrehbar angeordnet sind.

## Claims

1. A torsional vibration damper (1) at least comprising one input part (2) and one output part (3) having a common axis of rotation (5) extending along an axial direction (4), wherein the input part (2) and the output part (3) can be rotated in a limited manner relative to one another with the transmission of a torque along a circumferential direction (6), wherein the torsional vibration damper (1) has at least one ramp system (7, 8) with rolling elements (9), via which a relative rotation (10) of the input part (2) and output part (3) can be converted into a shifting (11) along the axial direction (4) of at least one component (12) of the torsional vibration damper (1), wherein the torsional vibration damper (1) has a plurality of energy storage elements (13), wherein all energy storage elements (13) of the torsional vibration damper (1) are arranged distributed around the circumferential direction (6) and each extend along the axial direction (4) and can be elastically deformed in the axial direction (4), wherein a first group (14) of rolling elements (9) is arranged on a first diameter (15) in a first ramp system (7) and a second group (16) of rolling elements (9) is arranged on a second diameter (17), which differs from the first diameter, in a second ramp system (8), **characterised in that** both ramp systems (7, 8) have tapered rollers or conical spherical rollers as rolling elements (9).

2. The torsional vibration damper (1) according to claim 1, wherein the energy storage elements (13) are designed as compression springs.

3. The torsional vibration damper (1) according to claim 1 or 2, wherein the first group (14) and the second group (16) comprise different or identical rolling elements (9).

4. The torsional vibration damper (1) according to one of the preceding claims, wherein the first ramp system (7) is formed by the input part (2) and a first disc (18) extending along the circumferential direction (6) about the axis of rotation (5), wherein the first group (14) is arranged between the input part (2) and the first disc (18); wherein the second ramp system (8) is formed by the output part (3) and the first disc (18), wherein the second group (16) is arranged between the output part (3) and the first disc (18); wherein the first disc (18) is the component (12) that can be displaced along the axial direction (4).

5. The torsional vibration damper (1) according to claim 4, wherein each group (14, 16) comprises two rows (19, 20) of rolling elements (9), wherein a first row (19) of rolling elements (9) on a first side (21) of the input part (2) and the output part (3) cooperate with the first disc (18); wherein a second row (20) of rolling elements (9) on a second side (22) opposite the first side (21) along the axial direction (4) interacts with a second disc (23) extending along the circumferential direction (6) about the axis of rotation (5), wherein the second disc (23) is also the component (12) that can be displaced along the axial direction (4).

6. The torsional vibration damper (1) according to claim 5, wherein the second disc (23) is arranged axially fixed at a first end (24) of at least one connecting element (25); wherein the connecting element (25) extends from the first end (24) along the axial direction (4) through the first disc (18) to a second end (26), wherein the plurality of energy storage elements (13) is arranged between the second end (26) and the first disc (18).

7. The torsional vibration damper (1) according to claim 6, wherein a plurality of connecting elements (25) is provided that are arranged distributed along the circumferential direction (6), wherein a third disc (27) extending along the circumferential direction (6) around the axis of rotation (5) is arranged axially fixed at the second end (26), on which the plurality of energy storage elements (13) is supported relative to the axial direction (4).

8. The torsional vibration damper (1) according to one of the preceding claims, wherein the plurality of energy storage elements (13) is arranged to be displaceable at least along the axial direction (4) relative to the input part (2) and the output part (3) or to be rotatable along the circumferential direction (7) relative to the input part (2) and the output part (3).

## Revendications

1. Amortisseur de vibrations de torsion (1) comprenant au moins une partie d'entrée (2) et une partie de sortie (3) comportant un axe de rotation (5) commun s'étendant le long d'une direction axiale (4), dans lequel la partie d'entrée (2) et la partie de sortie (3) lors de la transmission d'un couple, peuvent tourner dans une mesure limitée l'une par rapport à l'autre le long d'une direction circonférentielle (6), l'amortisseur de vibrations de torsion (1) présentant au moins un système de rampes (7, 8) comportant des corps de roulement (9), grâce auquel une rotation relative (10) de la partie d'entrée (2) et de la partie de sortie (3) peut être convertie en un déplacement (11) le long de la direction axiale (4) d'au moins une pièce (12) de l'amortisseur de vibrations de torsion (1), l'amortisseur de vibrations de torsion (1) présentant une pluralité d'éléments de stockage d'énergie (13), tous les éléments de stockage d'énergie (13) de l'amortisseur de vibrations de torsion (1) étant agencés de façon à être répartis le long de la direction circonférentielle (6) et s'étendant respectivement le long de la direction axiale (4) et étant élastiquement déformables dans la direction axiale (4), un premier groupe (14) de corps de roulement (9) étant agencés sur un premier diamètre (15) dans un premier système de rampes (7) et un second groupe (16) de corps de roulement (9) étant agencés sur un second diamètre (17) différent du premier diamètre dans un second système de rampes (8), **caractérisé en ce que** les deux systèmes de rampes (7, 8) présentent des rouleaux coniques ou des rouleaux pendulaires coniques servant de corps de roulement (9).

2. Amortisseur de vibrations de torsion (1) selon la revendication 1, dans lequel les éléments de stockage d'énergie (13) sont conçus sous forme de ressorts de compression.

3. Amortisseur de vibrations de torsion (1) selon la revendication 1 ou 2, dans lequel le premier groupe (14) et le second groupe (16) comprennent des corps de roulement (9) différents les uns des autres ou identiques.

4. Amortisseur de vibrations de torsion (1) selon l'une quelconque des revendications précédentes, dans lequel le premier système de rampes (7) est formé par la partie d'entrée (2) et un premier disque (18) s'étendant le long de la direction circonférentielle (6) autour de l'axe de rotation (5), le premier groupe (14) étant agencé entre la partie d'entrée (2) et le premier disque (18) ; le second système de rampe (8) étant formé par la partie de sortie (3) et le premier disque (18), le second groupe (16) étant agencé entre la partie de sortie (3) et le premier disque (18) ; le premier disque (18) étant la pièce (12) qui peut être déplacée le long de la direction axiale (4).

5. Amortisseur de vibrations de torsion (1) selon la revendication 4, dans lequel chaque groupe (14, 16) comprend deux rangées (19, 20) de corps de roulement (9), une première rangée (19) de corps de roulement (9) sur un premier côté (21) de la partie d'entrée (2) et de la partie de sortie (3) coopérant avec le premier disque (18) ; une seconde rangée (20) de corps de roulement (9) sur un second côté (22) opposé au premier côté (21) le long de la direction axiale (4) coopérant avec un deuxième disque (23) s'étendant le long de la direction circonférentielle (6) autour de l'axe de rotation (5), dans lequel le deuxième disque (23) est également la pièce (12) qui peut être déplacée le long de la direction axiale (4).

6. Amortisseur de vibrations de torsion (1) selon la revendication 5, dans lequel le deuxième disque (23) est agencé axialement fixe sur une première extrémité (24) d'au moins un élément de liaison (25) ; l'élément de liaison (25) s'étendant depuis la première extrémité (24) le long de la direction axiale (4) à travers le premier disque (18) jusqu'à une seconde extrémité (26), la pluralité d'éléments de stockage d'énergie (13) étant agencés entre la seconde extrémité (26) et le premier disque (18).

7. Amortisseur de vibrations de torsion (1) selon la revendication 6, dans lequel une pluralité d'éléments de liaison (25) sont prévus, lesquels sont agencés de façon à être répartis le long de la direction circonférentielle (6), au niveau de la seconde extrémité (26) un troisième disque (27), s'étendant le long de la direction circonférentielle (6) autour de l'axe de rotation (5), étant agencé axialement fixe, sur lequel la pluralité d'éléments de stockage d'énergie (13) sont supportés par rapport à la direction axiale (4).

8. Amortisseur de vibrations de torsion (1) selon l'une quelconque des revendications précédentes, dans lequel la pluralité d'éléments de stockage d'énergie (13) peuvent être déplacés au moins le long de la direction axiale (4) par rapport à la partie d'entrée (2) et à la partie de sortie (3) ou sont agencés de manière à pouvoir tourner le long de la direction circonférentielle (7) par rapport à la partie d'entrée (2) et à la partie de sortie (3).
